# EUROPÄISCHE PATENTSCHRIFT

(11) **EP 0 700 011 B1**
(45) Veröffentlichungstag und Bekanntmachung des Hinweises auf die Patenterteilung: **01.04.1998**
(21) Anmeldenummer: 95110537.8
(22) Anmeldetag: 06.07.1995
(51) Int. Cl.: G06K 7/10

(54) **Verfahren zum Parametrisieren eines Scanners**
Method for parametering a scanner
Méthode pour paramétrer un dispositif de balayage

(30) Priorität: 03.09.1994 DE 4431439
(43) Veröffentlichungstag der Anmeldung: 06.03.1996
(73) Patentinhaber: DATA LOGIC OPTIK ELEKTRONIK GmbH, 73268 Erkenbrechtsweiler (DE)
(72) Erfinder: Lenk, Bernhard, D-73230 Kirchheim/Teck (DE)
(74) Vertreter: Liesegang, Roland, Dr.-Ing.

(56) Entgegenhaltungen:
- EP-A- 0 574 024
- US-A- 4 861 972
- US-A- 4 868 375
- PATENT ABSTRACTS OF JAPAN vol. 11 no. 279 (P-614) ,10.September 1987 & JP-A-62 077684 (HITACHI ELECTRONICS ENG CO LTD) 9.April 1987,

## Beschreibung

Die Erfindung betrifft ein Verfahren zum Parametrisieren eines Scanners für die Erfassung eines Codes, insbesondere Strichcodes.

Nach dem derzeitigen Stand der Technik ist es erforderlich, einen Scanner nach Vorgaben zu parametrisieren. Diese, von Fachpersonal durchzuführende Arbeit kann sehr aufwendig sein, da die Parameter der Anlage, in der der Scanner eingesetzt ist und die jeweiligen Anforderungen sehr genau bekannt sein müssen, um den Scanner einstellen zu können. Wenn die Einstellarbeiten abgeschlossen sind, kann der Scanner seinen Normalbetrieb aufnehmen. Für stationäre Scanner bedeutet dies, daß mit Strichcode versehene Gegenstände, beispielsweise Waren, Paletten, Boxen, Pakete und so weiter am Scanner vorbeigeführt und dabei im Hinblick auf ihren Code erfaßt und gelesen werden.

Das Dokument EP-A-0 574 024 offenbart ein Verfahren zum Einstellen der optischen Parameter eines Scanners, um den Scanner an die Lesbarkeit oder Qualität eines Codes anzupassen. In einem Lernmodus wird von dem Scanner ein Testsymbol mehrmals gelesen, um Parameter, wie den Fokus, Entscheidungsschwellen etc. des Scanners abhängig von der Lesbarkeit des Barcodes (aufgrund von Verschmutzung etc.) zu optimieren. Ferner kann der Scanner in einem adaptiven Modus so eingestellt werden, daß er einen definierten Bereich von Arbeitsentfernungen und Symbolen bestimmter Lesbarkeitsqualitäten abdeckt. Die gesamte Einstellung des Scanners gemäß dieser Druckschrift bezieht sich auf die Einstellung optischer Parameter, wie Fokus und Entscheiderschwellen der Optik, um den Scanner optimal an die optische Lesbarkeit des Barcodes anzupassen. Das Dokument befaßt sich nicht mit einer automatischen Erkennung des Codetyps, der mit Hilfe des Scanners ausgewertet werden soll.

Der Erfindung liegt die Aufgabe zugrunde, das Parametrisieren eines Scanners im Hinblick auf die vollständig automatische Parametereinstellung erheblich zu vereinfachen.

Diese Aufgabe wird erfindungsgemäß durch ein Verfahren mit den Merkmalen von Anspruch 1 bzw. einen Scanner mit den Merkmalen von Anspruch 2 gelöst. Die variabel einstellbaren Parameter werden in einem Lernmodus (Teach-In-Modus) während des Lesebetriebs des Scanners, insbesondere während dessen Inbetriebnahme, automatisch aus den jeweiligen Realbedingungen abgeleitet und eingestellt. Erfindungsgemäß ist somit vorgesehen, daß das Parametrisieren des Scanners selbsttätig erfolgt. Vorzugsweise wird der Scanner hierzu -in der Art einer Lichtschranke- beispielsweise an der Transportstrecke von Waren befestigt. Der Scanner wird dann in den erfindungsgemäßen Lernmodus versetzt, und es werden die mit Code versehenen Waren am Scanner vorbeigeführt, wobei der Scanner die jeweiligen Daten und Informationen abliest. Der Scanner gelangt auf diese Art und Weise automatisch an alle für ihn relevanten Daten, wobei dies während der realen Anwendung erfolgt. Der erwähnte Lernprozeß erhöht sich selbstverständlich in seinem Umfang mit der Komplexibilität der Anwendung. So kann es beispielsweise erforderlich sein, den Lesevorgang während des Lernbetriebs zu wiederholen. Nach Abschluß des Lernbetriebs verfügt der Scanner über die Werte der variabel einstellbaren Parameter, so daß in den Normalbetrieb übergegangen werden kann. Aufwendige Einstellarbeiten, die von Fachpersonal durchzuführen sind, können demnach entfallen. Für eine Vielzahl von Anwendungen gibt die erfindungsgemäße Lehre somit eine hilfreiche Unterstützung im praktischen Einsatz. Selbstverständlich ist es ebenfalls möglich, daß für den Lernbetrieb nicht die Gegenstände am Scanner, sondern der Scanner an den Gegenständen entlang geführt werden. Eine Bewegung sowohl vom Scanner als auch vom Gegenstand ist ferner möglich. Hierbei ist allerdings anzumerken, daß es bei der Erfindung nicht auf die Bewegung ankommt, sondern lediglich darauf, daß der Scanner im Lernmodus in der Lage ist, die Parameter von dem Objekt abzulesen.

Nach einer Weiterbildung der Erfindung ist vorgesehen, daß der Scanner zur Parametrisierung -wie bereits erwähnt- mehrere Lesevorgänge an einer entsprechenden Anzahl von Objekten durchführt.

Der Scanner nimmt automatisch nach Abschluß des Lernbetriebs seinen Normalbetrieb auf. Dieses Vorgehen hat zur Folge, daß nur die ersten Gegenstände sowie deren Codes beim Vorbeiführen am Scanner dazu dienen, die Parametrisierung vorzunehmen und daß die folgenden Gegenstände sowie deren Codes dann bereits im Normalbetrieb erfaßt werden, ohne daß hierfür Bedienpersonal tätig werden muß.

Schließlich stellt der Scanner im Lernmodus insbesondere folgende Parameter automatisch ein: Codeart, Stellenzahl (mit oder ohne Prüfziffer), Breite der Ruhezone des den Code tragenden Etiketts oder dergleichen, Overflow-Einstellung des Scanners.

Im folgenden wird auf ein Ausführungsbeispiel eingegangen. Ein Scanner ist ortsfest an einer Transportstrecke für Waren befestigt und erfaßt -bei entlang der Transportstrecke bewegten Waren- deren Code. Es wird davon ausgegangen, daß der Scanner noch nicht auf die speziellen Randbedingungen bei der vorgesehenen Leseaufgabe eingestellt ist. Erfindungsgemäß wird der Scanner vor Aufnahme des Normalbetriebs in einen Lernmodus versetzt, in dem er während des Transports der Gegenstände den jeweiligen Code, beispielsweise Strichcode, und gegebenenfalls auch weitere Parameter, wie beispielsweise die Ruhezone eines den Code tragenden Etiketts der Ware, erfaßt und unter den später auch im Normalbetrieb vorliegenden Realbedingungen die jeweils variabel einstellbaren Parameter bestimmt und dementsprechende Einstellungen für die spätere Aufgabe vornimmt. Auf diese Art und Weise ist es möglich, daß die beziehungsweise einige der vorstehend erwähnten Parameter oder auch noch weitere, nicht aufgeführte Parameter, ermittelt und eingestellt werden. Ist die Lernaufgabe, beispielsweise nach Erfassen einer zu definierenden Anzahl von Objekten, abgeschlossen, so schaltet sich der Scanner automatisch in seinen Normalbetrieb um und nimmt seine eigentliche Leseaufgabe wahr, wobei er die ermittelten Parameter berücksichtigt.

Nach einer speziellen Ausführungsform der Erfindung ist vorgesehen, daß bei der Parametrisierung ein iterativer Verifikationsprozeß durchgeführt wird. Stellt beispielsweise im Teach-in-Modus der Scanner fest, daß der Leseabstand 50 cm beträgt und wird im späteren laufenden Normalbetrieb ein Leseabstand tatsächlich realisiert und ermittelt, der beispielsweise um 45 cm herum schwankt, so ist es nach diesem Ausführungsbeispiel möglich, daß entweder eine automatische oder eine manuell ausgelöste Anpassung des entsprechenden Parameters erfolgt. Bei der manuellen Anpassung gibt die Einrichtung ein Signal ab, das von der Bedienperson erkannt wird, so daß diese eine Prüfung vornehmen kann und möglicherweise den neuen Leseabstand als neuen Parameter zuläßt. Bei der automatischen Variante wird vorzugsweise noch ein weiterer Prüfschritt vor Übernahme einer neuen Parametergröße durchgeführt, bei dem geprüft wird, ob diese Veränderung günstig für das System oder eher ungünstig ist. Im günstigen Fall erfolgt dann automatisch die Veränderung; im ungünstigen Fall wird auf die manuelle Möglichkeit der Parameterveränderung umgeschaltet.

## Patentansprüche

1. Verfahren zum automatischen Parametrisieren eines Scanners für die Erfassung eines Codes, insbesondere Strichcodes, bei dem der Scanner an einer Fördereinrichtung montiert wird, auf der mehrere einen Code tragende Gegenstände transportiert werden, der Scanner zur Parametrisierung in einem Lernmodus nacheinander die Codes der mehreren sich bewegenden Objekte liest, während des Lernmodus des Scanners die folgenden einstellbaren Parameter automatisch aus den jeweiligen Realbedingungen abgeleitet und eingestellt werden: Codeart und/oder Stellenzahl des Codes mit oder ohne Prüfziffer und/oder Breite der Ruhezone eines den Code tragenden Etiketts und/oder der damit verbundenen Overflow-Einstellung des Scanners, und der Scanner automatisch nach dem Lesen einer vorgegebenen Anzahl von Objektcodes seinen Normalbetrieb aufnimmt.

2. Scanner für die Erfassung eines Codes, insbesondere Strichcodes, unter Verwendung von variabel einstellbaren Parametern, wobei der Scanner an einer Fördereinrichtung montiert ist, auf der mehrere einen Code tragende Gegenstände transportierbar sind, mit
Mitteln zum Lesen der Codes der mehreren sich bewegenden Objekte nacheinander, während der Scanner in einem Lernmodus ist,
Mitteln zum automatischen Ableiten und Einstellen der folgenden einstellbaren Parameter auf der Grundlage der jeweiligen Realbedingungen: Codeart und/oder Stellenzahl des Codes mit oder ohne Prüfziffer und/oder Breite der Ruhezone eines den Code tragenden Etiketts und/oder der damit verbundenen Overflow-Einstellung des Scanners während des Lernmodus; und
Mitteln zum automatischen Umschalten des Scanners in seinen normalen Betriebsmodus, nachdem während des Lernmodus eine vorgegebene Anzahl Objektcodes gelesen wurde.

## Claims

1. A method of automatically parameterising a scanner for detecting a code, more particularly a bar code, wherein the scanner is mounted on a conveyor on which a number of coded articles are being conveyed; in a learning mode for parameterising, the scanner successively reads the codes on the plurality of moving objects; during the learning mode of the scanner, the following adjustable parameters are automatically derived from the relevant actual conditions and adjusted: nature of code and/or number of digits in the code with or without test digit and/or width of the inoperative zone of a label bearing the code and/or the associated overflow adjustment of the scanner; and the scanner automatically takes up normal operation after reading a preset number of object codes.

2. A scanner for detecting a code, more particularly a bar code, using variably adjustable parameters, wherein the scanner is mounted on a conveyor on which a number of coded articles are conveyable, comprising means for reading the code on the successive moving objects while the scanner is in a learning mode, means for automatically deriving and setting the following adjustable parameters on the basis of the relevant actual conditions: nature of code and/or number of digits in the code with or without test digit and/or width of the inoperative zone of a coded label and/or of the associated overflow adjustment of the scanner during the learning mode; and means for automatically switching the scanner over to normal operating mode after a preset number of object codes have been read during the learning mode.

## Revendications

1. Procédé pour paramétrer automatiquement un scanner de saisie d'un code, notamment un code-barre, dans lequel le scanner est monté sur un dispositif d'alimentation sur lequel sont transportés plusieurs objets portant un code, le scanner, afin de le paramétrer dans un mode d'apprentissage, lisant l'un après l'autre les codes de plusieurs objets en mouvement, les paramètres réglables suivants étant automatiquement dérivés et réglés à partir des conditions réelles courantes pendant le mode d'apprentissage du scanner : le type de code et/ou le nombre de chiffres des codes avec ou sans chiffre de vérification et/ou la largeur de la zone de repos d'une étiquette portant le code et/ou le réglage de débordement du scanner qui y est lié, et reprenant automatiquement son mode de fonctionnement normal après la lecture d'un nombre prédéterminé de codes d'objet.

2. Scanner pour la saisie d'un code, notamment d'un code barre, utilisant des paramètres réglables de manière variable, le scanner étant monté sur un dispositif d'alimentation pouvant transporter plusieurs objets portant un code, comprenant :
des moyens pour lire l'un après l'autre les codes de plusieurs objets en mouvement tandis que le scanner est dans un mode d'apprentissage,
des moyens pour dériver et régler automatiquement pendant le mode d'apprentissage les paramètres réglables suivants en fonction des conditions réelles courantes : le type de code et/ou le nombre de chiffres du code avec ou sans chiffre de vérification et/ou la largeur de la zone de repos d'une étiquette portant le code et/ou le réglage de débordement du scanner qui y est lié ; et
des moyens pour commuter automatiquement le scanner dans son mode de fonctionnement normal après qu'un nombre prédéterminé de codes d'objet ont été lus pendant le mode d'apprentissage.
